# EUROPÄISCHE PATENTSCHRIFT

(11) **EP 2 104 623 B1**
(45) Veröffentlichungstag und Bekanntmachung des Hinweises auf die Patenterteilung: **26.01.2011**
(21) Anmeldenummer: 07847183.6
(22) Anmeldetag: 15.11.2007
(51) Int. Cl.: B60S 1/08

(54) **GETRIEBEGEHÄUSE MIT EINEM WISCHERGETRIEBE**
GEAR MECHANISM HOUSING WITH A WIPER GEAR MECHANISM
BOÎTIER DE TRANSMISSION POURVU D'UNE TRANSMISSION D'ESSUIE-GLACE

(30) Priorität: 15.12.2006 DE 202006019832 U; 22.12.2006 DE 102006061269
(43) Veröffentlichungstag der Anmeldung: 30.09.2009
(73) Patentinhaber: Robert Bosch GmbH, 70442 Stuttgart (DE)
(72) Erfinder: STUBNER, Armin, 77815 Buehl-Altschweier (DE); HURST, Richard, 77652 Offenburg (DE); SAETTELE, Marco, 77815 Buehl (DE); HEYDER, Martin, 77833 Ottersweier (DE)
(86) Internationale Anmeldenummer: PCT/EP2007/062412
(87) Internationale Veröffentlichungsnummer: WO 2008/071514

(56) Entgegenhaltungen:
- EP-A- 0 692 414
- US-B1- 6 343 403

## Beschreibung

### Stand der Technik

Die Erfindung betrifft ein Getriebegehäuse mit einem Wischergetriebe für eine Wischvorrichtung eines Kraftfahrzeuges gemäß dem Oberbegriff des Anspruchs 1.

Ein Getriebegehäuse für eine Wischervorrichtung ist beispielsweise in der US 6,343,403 B1 beschrieben. Üblicherweise wird ein derartiges Getriebegehäuse an einem karosseriefesten Befestigungsgestänge festgelegt.

Das von einem elektrischen Antriebsmotor angetriebene Wischergetriebe umfasst in der Regel ein Schneckengetriebe mit einer auf der Motorwelle sitzenden Abtriebsschnecke und einem mit der Abtriebsschnecke kämmenden Schneckenrad. Abhängig davon, wie das Schneckenrad in Bezug auf die Motorwelle mit Abtriebsschnecke angeordnet ist, spricht man von linken bzw. rechten Getriebelagen. Für die beiden Getriebelagen werden im Stand der Technik spiegelbildliche Gehäuse mit spiegelbildlichen Gehäusegrundkörpern und spiegelbildlichen Gehäusedeckel eingesetzt. Die zum Einsatz kommenden Dichtungen der spiegelbildlichen Getriebegehäuse sind dabei bei manchen Anwendungen spiegelbildlich zueinander ausgebildet. Nachteilig hierbei ist, dass für sämtliche spiegelbildlichen Bauteile unterschiedliche Werkzeuge benötigt werden.

Ein gattungsgemäßes Getriebegehäuse für eine Wischervorrichtung ist aus dem Dokument EP-A-0692414 bekannt.

### Offenbarung der Erfindung

### Technische Aufgabe

Der Erfindung liegt daher die Aufgabe zugrunde, ein Getriebegehäuse mit einem universell einsetzbaren Gehäusedeckel vorzuschlagen.

### Technische Lösung

Diese Aufgabe wird mit den Merkmalen des Anspruchs 1 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegeben Merkmale.

Der Erfindung liegt der Gedanke zugrunde, den Gehäusedeckel derart auszubilden, dass dieser mit zwei spiegelsymmetrisch ausgebildeten Getriebegrundkörpern kombinierbar ist, wodurch die Werkzeugvielfalt und damit die Werkzeugkosten durch die Nutzung einer Art von Gehäusedeckel für zwei spiegelbildliche Getriebegestänge deutlich reduziert werden können. Gemäß der Erfindung ist vorgesehen, anstelle eines einteiligen Gehäusedeckels einen mehrteiligen, insbesondere zweiteiligen Gehäusedeckel vorzusehen. Der mehrteilige Gehäusedeckel umfasst ein Rahmengestell und ein Deckelelement, wobei das Rahmengestell als zwischen Gehäusegrundkörper und Deckelelement anzuordnendes Zwischenelement bzw. Adapterstück dient. Das Rahmenelement und das Deckelelement sind gemäß der Erfindung derart konfiguriert, dass das Deckelelement an zwei gegenüberliegenden Rahmenelementseiten festlegbar ist, wobei das Deckelelement hierzu um 180° um einen durch seine Flächenerstreckung verlaufende Achse gedreht werden muss. Ferner ist vorgesehen, dass die beiden gegenüberliegenden Seiten des Rahmenelementes derart spiegelsymmetrisch zueinander ausgebildet sind, dass das Rahmenelement mit einer seiner gegenüberliegenden Seiten an einem ersten Getriebegrundkörper, insbesondere mit einem Getriebe mit "linker Getriebelage" und mit der gegenüberliegenden Seite (also nach dem Wenden um 180°) an einem zweiten, zu dem ersten Getriebegrundkörper spiegelsymmetrischen Getriebegrundkörper, insbesondere mit einer "rechten Getriebelage" anordenbar, das heißt montierbar ist. Anders ausgedrückt sind die Kontaktbereiche der Getriebegrundkörper, des Rahmenelements und des Deckelelements aufeinander abgestimmt, das heißt sie passen zueinander. Soll der Gehäusedeckel mit Rahmenelement und Deckelelement an dem ersten Gehäusegrundkörper montiert werden, so wird das Rahmenelement zunächst mit einer ersten Seite auf den Gehäusegrundkörper aufgelegt, woraufhin die Auflage einer ersten Deckelelementseite auf die zweite Rahmenelementseite erfolgt. Soll dasselbe Rahmenelement und dasselbe Deckelelement auf einem zweiten, spiegelsymmetrischen Getriebegehäuse montiert werden, wird das Rahmenelement um 180° gedreht und mit seiner zweiten Seite auf dem zweiten Getriebegehäuse aufgelegt, woraufhin das ebenfalls um 180° gedrehte Deckelelement mit seiner zweiten Seite auf der ersten Seite des Rahmenelementes zum Liegen kommt. Selbstverständlich können Deckelelement und Rahmenelement auch vor der Auflage auf den Gehäusegrundkörper zusammengefasst werden. Von der Erfindung sind auch Ausführungen erfasst, bei denen das Rahmenelement zumindest abschnittsweise in den Grundkörper eingesetzt wird und umgekehrt. Ebenso ist es denkbar, das Deckelelement in das Rahmenelement hinein zu versenken, also die Anlagekonturen des Rahmenelementes nicht unmittelbar außen anzubringen.

In Ausgestaltung der Erfindung ist mit Vorteil vorgesehen, dass das Rahmenelement zwei entgegengesetzt orientierte, spiegelsymmetrische Anlagekonturen (Anlagebereiche oder Anlageflächen) zur Anlage an dem Deckelelement und dem Gehäusegrundkörper umfasst. Dabei können die Anlagekonturen beispielsweise von einer Ringfläche und/oder einer Umlaufkante des Rahmenelementes gebildet sein.

Gemäß einer vorteilhaften Ausgestaltung der Erfindung ist vorgesehen, dass das Deckelelement zwei Gegenkonturen (Gegenbereiche oder Gegenanlageflächen) zu den spiegelsymmetrischen Anlagekonturen des Rahmenelementes aufweist, wobei die beiden Gegenkonturen spiegelsymmetrisch ausgebildet sind, wodurch jeder Gegenkontur mit einer der Anlagekonturen in Deckung bringbar ist. Jeder Anlagekontur entspricht bevorzugt einer formkongruenten Gegenkontur des Deckelelementes.

Gemäß einer zweckmäßigen Ausgestaltung der Erfindung weist der Gehäusegrundkörper eine Gegenkontur (Gegenbereich, Gegenanlagefläche) auf, die mit einer der Anlagekonturen des Rahmenelementes in Deckung bringbar ist, bevorzugt zumindest abschnittsweise formkongruent zu einer der Anlagekonturen des Rahmenelementes ausgebildet ist. Soll das Rahmenelement auf einem spiegelbildlichen Gehäusegrundkörper montiert werden, so muss die Gegenkontur dieses spiegelbildlichen Gehäusegrundkörpers derart ausgebildet sein, dass sie mit der anderen der beiden Anlagekonturen des Rahmenelementes in Deckung bringbar ist.

Bevorzugt ist zwischen Deckelelement und Rahmenelement sowie zwischen Rahmenelement und Gehäusegrundkörper jeweils eine Ringdichtung vorgesehen. Unter Ringdichtung wird hierbei eine umfangsgeschlossene Dichtung verstanden, die nicht notwendigerweise kreisförmig konturiert sein muss. Bevorzugt sind beide Ringdichtungen in jeweils einer Aufnahmenut des Rahmenelementes aufgenommen, wobei die beiden Aufnahmenuten für die Ringdichtungen spiegelsymmetrisch zueinander und bevorzugt die zur Anwendung kommenden Dichtungen identisch und derart ausgebildet sind, so dass sie mit gegenüberliegenden Seiten in beide Aufnahmenuten einsetzbar sind. Durch das Vorsehen identischer Dichtungen können die Herstellungskosten reduziert und die Montage sowie die Lagerhaltung vereinfacht werden.

Gemäß einer bevorzugten Ausführungsform ist das Deckelement als flaches, scheibenförmiges Bauteil ausgebildet, wodurch die Oberseite des fertigen Getriebegehäuses unabhängig von der Ausrichtung des Deckelelementes eben ist. Bevorzugt werden die Gegenkonturen des scheibenförmigen Deckelelementes von einem randseitigen, ringförmigen Flächenbereich (Anlagebereich für eine Dichtung) der Seitenflächen des Deckelelementes gebildet.

Mit Vorteil sind in das Rahmenelement Elektronikbauteile integriert. Dabei handelt es sich bevorzugt um Entstörelektronik für den Scheibenwischerantrieb. Zur Stabilisierung des Rahmenelementes sind bevorzugt Verstrebungen vorgesehen, auf denen die Elektronikbauteile mit Vorteil festgelegt sind.

Zur Unterbringung von Bauteilen, die unabhängig von der Orientierung des Rahmengestells zur Ausübung ihrer Funktion in Richtung des Gehäusegrundkörpers orientiert sein müssen, wie beispielsweise Kontaktschleifer, die in an sich bekannter Weise mit einer Schaltscheibe innerhalb des Getriebegrundkörpers zusammenwirken müssen, sind in Weiterbildung der Erfindung auf beiden Seiten des Rahmengestells Haltemittel vorgesehen, an denen diese, insbesondere mechanischen Bauteile festgelegt, insbesondere festgesteckt werden können.

Gegenstand der Erfindung ist auch ein System bestehend aus zwei spiegelsymmetrisch zueinander ausgebildeten Gehäusegrundkörpern, wobei die Rahmengestelle und die Deckelelemente der Gehäusegrundkörper etwa identisch ausgebildet, jedoch entgegengesetzt orientiert auf dem jeweiligen Gehäusegrundkörper angeordnet sind.

### Kurze Beschreibung der Zeichnungen

Weiter Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen Figur eine Explosionsdarstellung zweier Getriebegehäuse mit einem Rahmenelement und einem Deckelelement, wobei der zweiteilige Gehäusedeckel an zwei spiegelsymmetrischen Gehäusegrundkörpern montierbar ist.

### Ausführungsform der Erfindung

In der einzigen Figur sind in der unteren Zeichnungshälfte zwei zueinander spiegelbildlich ausgebildete schalenförmige Getriebegrundkörper 1, 2 zur Aufnahme eines rechtslagigen sowie eines linkslagigen Getriebes gezeigt. An dem jeweiligen Getriebegrundkörper 1, 2 ist ein Motorgehäuse 3, 4 eines nicht gezeigten elektrischen Antriebsmotors angeflanscht. Die Getriebegrundkörper 1, 2 weisen jeweils eine Umfangswandung 5, 6 auf, deren freie Stirnflächen 7, 8 jeweils eine Gegenkontur 9, 10 zur Anlage an einem Zwischen- bzw. Rahmenelement 11 dienen.

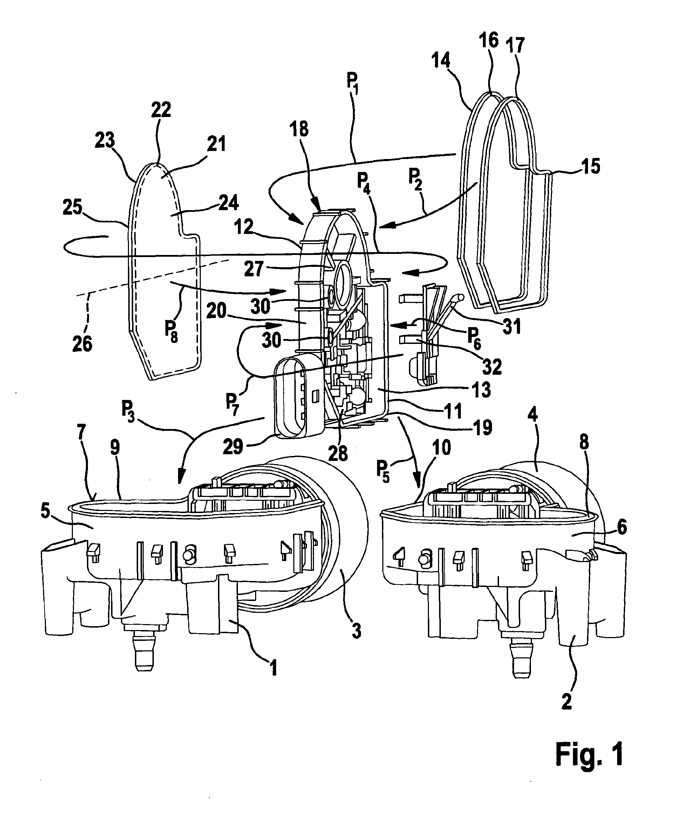

Das in etwa in der Figurmitte dargestellte Rahmenelement 11 kann mit einer in der Figur 1 verdeckten ersten Seite 12 zur Anlage an dem ersten Getriebegrundkörper 1 und mit der gegenüberliegenden zweiten Seite 13 zur passgenauen Anlage an dem spiegelsymmetrischen zweiten Getriebegrundkörper 2 gebracht werden. Hierzu weist das Rahmenelement 11 eine erste Anlagekontur 14 und eine zweite in die entgegengesetzte Richtung orientierte Anlagekontur 15 auf, die spiegelsymmetrisch zueinander ausgebildet sind. Die Anlagekonturen 14, 15 werden gebildet von zwei identischen, als Ringdichtungen ausgebildeten Dichtungen 16, 17 bzw. von deren freien Stirnflächen, wobei die Dichtungen 16, 17 in entsprechenden, zueinander spiegelsymmetrischen Aufnahmenuten 18, 19 auf der ersten und zweiten Seite 12, 13 des Rahmenelementes 11 aufgenommen sind. Die Flächenerstreckung der ringflächenförmigen Anlagekonturen 14, 15 ist in Querrichtung (Radialrichtung) zu einer Umfangswand 20 (Umfangsrahmen) des Rahmenelementes 11 orientiert. Die Umfangswand 20 verläuft im Wesentlichen parallel zu der Umfangswandung 5, 6 der Getriebegrundkörper 1, 2.

Das Rahmenelement 11 kann auf beiden Seiten 12, 13 mit ein und demselben Deckelelement 21, welches als scheibenförmiges Bauteil ausgebildet ist, verschlossen werden. Um das Deckelelement 21 bzw. eine gestrichelt begrenzt dargestellte randseitige, ringförmige Gegenkontur 22, 23 jeder Deckelflachseite 24, 25 mit der ersten bzw. zweiten Anlagekontur 14, 15 in Deckung zu bringen, muss das Deckelelement 21 um eine gedachte, durch die Flächenerstreckung des Deckelelementes 21 verlaufende Drehachse 26 um 180° gewendet werden.

Die gemeinsame Festlegung des auf dem Rahmenelement 11 aufliegenden Deckelelementes 21 und dem Rahmenelement 11 an dem jeweiligen Getriebegrundkörper 1, 2 erfolgt beispielsweise über nicht gezeigte Halteklammern.

Zur Verstärkung des Rahmenelementes 11 ist die Umfangswand 20 mit einer Vielzahl von inneren Verstrebungen 27 (Innenrahmen) versehen, die gleichzeitig zur Halterung von Elektronikbauteilen 28 dienen. Zum Anschluss der Elektronikbauteile 28 ist eine codierte Buchse 29 vorgesehen, die die Aufnahme eines Steckverbinders in nur einer Relativausrichtung zu der Buchse 29 zulässt.

In den Verstrebungen 27 sind zu beiden Seiten 12, 13 des Rahmenelementes 11 hin offene Steckkanäle 30 ausgebildet, in die ein Kontaktschleifer 31 mit korrespondierenden Steckbolzen 32 fixierbar ist. Der Kontaktschleifer 31 kann somit auf beiden Seiten 12, 13 des Rahmenelementes 11 montiert werden.

Bei der Montage des mit einem nicht gezeigten Schneckengetriebe ausgestatteten Getriebegehäuses wird wie folgt vorgegangen. Zunächst wird die erste Dichtung 16 in die erste Aufnahmenut 18 in Pfeilrichtung P1 eingelegt. Daraufhin wird die zweite Dichtung 17 in die zweite Aufnahmenut 19 in Pfeilrichtung P2 eingelegt. Somit weist das Rahmenelement 11 zwei entgegengesetzt ausgerichtete Auflagekonturen 14, 15 auf.

Soll ein Getriebegehäuse mit dem ersten Getriebegrundkörper 1 ausgestattet werden, so wird zunächst der Kontaktschleifer 31 von der ersten Seite 12 her in Pfeilrichtung P7 mit seinen Steckbolzen 32 in die Steckkanäle 30 eingeführt. Dann wird das mit den Dichtungen 16, 17 ausgestattete Rahmenelement 11 mit der ersten Auflagekontur 14 auf die Gegenkontur 9 des ersten Getriebegrundkörpers 1 in Pfeilrichtung P3 aufgelegt. Daraufhin wird das Deckelelement 21 mit seiner in der Zeichnung verdeckten randseitigen Gegenkontur 23 auf die zweite Auflagekontur 15 des Rahmenelementes 11 in Pfeilrichtung P4 aufgelegt. Im Anschluss wird das Deckelelement 21 mitsamt dem Rahmenelement 11 gegen den Getrieberundkörper 1 verspannt.

Soll dagegen ein Getriebegehäuse mit dem zu dem ersten Getriebegrundkörper 1 spiegelsymmetrischen zweiten Getriebegrundkörper 2 montiert werden, so wird zunächst der Kontaktschleifer 31 von der zweiten Seite 13 des Rahmenelementes 11 her in Pfeilrichtung P6 in die Steckkanäle 30 mit seinem Steckbolzen 32 eingeführt. Das Rahmenelement 11 muss um eine nicht gezeigte, parallel zu der Drehachse 26 verlaufende Achse verschwenkt werden, so dass das Rahmenelement 11 mit seiner zweiten Auflagekontur 15 in Pfeilrichtung P5 zur Anlage an der Gegenkontur 10 des zweiten Getriebegrundkörpers 2 kommt. Daraufhin wird das Deckelelement 21 mit seiner randseitigen Gegenkontur 22 in Pfeilrichtung P8 zur Deckung gebracht mit der ersten Dichtung 16 bzw. der ersten Auflagekontur 14, woraufhin eine Verspannung des Deckelelementes 21 und des Rahmenelementes 11 gegen den zweiten Getriebegrundkörper 2 erfolgt. Im montierten Zustand überragt das Deckelelement 21 das Rahmenelement nicht in radialer Richtung. Ebenso überragt das Rahmenelement 11 den Getriebegrundkörper 2 nicht seitlich.

## Patentansprüche

1. Getriebegehäuse mit einem Wischergetriebe für eine Wischervorrichtung eines Kraftfahrzeugs, mit einem Gehäusegrundkörper (1, 2) und einem den Gehäusegrundkörper (1, 2) verschließenden Gehäusedeckel, und der Gehäusedeckel ein Rahmenelement (11) und ein Deckelelement (21) umfasst,
**dadurch gekennzeichnet, dass**
das Rahmenelement (11) mit einer von zwei gegenüberliegenden Seiten (12, 13) an dem Gehäusegrundkörper (1, 2) und das Deckelelement (21) an beiden Seiten (12, 13) des Rahmenelementes (11) montierbar ist.

2. Getriebegehäuse nach Anspruch 1, **dadurch gekennzeichnet, dass** das Rahmenelement (11) zwei auf unterschiedlichen Seiten des Rahmenelementes (11) angeordnete, spiegelsymmetrische Anlagekonturen (14, 15) umfasst.

3. Getriebegehäuse nach Anspruch 2, **dadurch gekennzeichnet, dass** das Deckelelement (21) zwei Gegenkonturen (22, 23) aufweist, wobei jede Gegenkontur (22, 23) mit einer der Anlagekonturen (14, 15) in Deckung bringbar ist.

4. Getriebegehäuse nach einem der Ansprüche 2 oder 3, **dadurch gekennzeichnet, dass** der Gehäusegrundkörper (1, 2) eine Gegenkontur (9, 10) aufweist, die mit einer der Anlagekonturen (14, 15) des Rahmenelements (11) in Deckung bringbar ist.

5. Getriebegehäuse nach einem der vorhergehenden Ansprüche, **dadurch gekennzeichnet, dass** jede Seite (12, 13) des Rahmenelements (11) eine Aufnahmenut (18, 19) für eine Dichtung (16, 17) aufweist, und dass die beiden Aufnahmenuten (18, 19) spiegelsymmetrisch zueinander ausgebildet sind.

6. Getriebegehäuse nach Anspruch 5 und einem der Ansprüche 2 bis 4, **dadurch gekennzeichnet, dass** in jeder Aufnahmenut (18, 19) eine Dichtung (16, 17) aufgenommen ist, und dass die beiden Dichtungen (16, 17) identisch ausgebildet sind und zumindest bereichsweise die Anlagekonturen (14, 15) des Rahmenelementes (11) bilden.

7. Getriebegehäuse nach einem der vorhergehenden Ansprüche, **dadurch gekennzeichnet, dass** das Deckelelement (21) als scheibenförmiges Bauteil, vorzugsweise als Stanz-/Biegeteil ausgebildet ist.

8. Getriebegehäuse nach einem der vorhergehenden Ansprüche, **dadurch gekennzeichnet, dass** in dem Rahmenelement (11) Elektronikbauteile, insbesondere Entstörbauteile, angeordnet sind.

9. Getriebegehäuse nach einem der vorhergehenden Ansprüche, **dadurch gekennzeichnet, dass** an dem Rahmenelement (11) eine, insbesondere kodierte, Anschlussbuchse (29) vorgesehen ist.

10. Getriebegehäuse nach einem der vorgehenden Ansprüche, **dadurch gekennzeichnet, dass** auf beiden Seiten (12, 13) des Rahmenelements (11) spiegelsymmetrisch angeordnete Haltemittel, insbesondere Aufnahmeöffnungen (30), zu alternativen Aufnahme mindestens eines Bauteils, insbesondere von Kontaktschleifern (31) vorgesehen sind.

11. System bestehend aus zwei Getriebegehäusen nach einem der vorhergehenden Ansprüche, **dadurch gekennzeichnet, dass** die Gehäusegrundkörper (1, 2) der Getriebegehäuse spiegelsymmetrisch ausgebildet sind, und dass die Rahmenelemente (11) und die Deckelelemente (21) der beiden Gehäusegrundkörper (1, 2) identisch ausgebildet und entgegengesetzt orientiert angeordnet sind.

## Claims

1. Gear mechanism housing with a wiper gear mechanism for a wiper device of a motor vehicle, with a basic housing body (1, 2) and a housing cover closing the basic housing body (1, 2), and the housing cover comprises a frame element (11) and a cover element (21), **characterized in that** the frame element (11) can be fitted to the basic housing body (1, 2) by one of two opposite sides (12, 13) and the cover element (21) can be fitted to both sides (12, 13) of the frame element (11).

2. Gear mechanism housing according to Claim 1, **characterized in that** the frame element (11) comprises two mirror-symmetrical bearing contours (14, 15) arranged on different sides of the frame element (11).

3. Gear mechanism housing according to Claim 2, **characterized in that** the cover element (21) has two mating contours (22, 23), each mating contour (22, 23) being able to be brought to overlap with one of the bearing contours (14, 15).

4. Gear mechanism housing according to either of Claims 2 and 3, **characterized in that** the basic housing body (1, 2) has a mating contour (9, 10) which can be brought to overlap with one of the bearing contours (14, 15) of the frame element (11).

5. Gear mechanism housing according to one of the preceding claims, **characterized in that** each side (12, 13) of the frame element (11) has a receiving groove (18, 19) for a seal (16, 17), and **in that** the two receiving grooves (18, 19) are formed mirror-symmetrically with respect to each other.

6. Gear mechanism housing according to Claim 5 and one of Claims 2 to 4, **characterized in that** a seal (16, 17) is accommodated in each receiving groove (18, 19), and **in that** the two seals (16, 17) are of identical design and at least in regions form the bearing contours (14, 15) of the frame element (11).

7. Gear mechanism housing according to one of the preceding claims, **characterized in that** the cover element (21) is designed as a disc-shaped component, preferably as a punched and bent component.

8. Gear mechanism housing according to one of the preceding claims, **characterized in that** electronic components, in particular anti-interference components, are arranged in the frame element (11).

9. Gear mechanism housing according to one of the preceding claims, **characterized in that** a connection socket (29), in particular a coded connection socket, is provided on the frame element (11).

10. Gear mechanism housing according to one of the preceding claims, **characterized in that** holding means arranged mirror-symmetrically, in particular receiving openings (30), for the alternative receiving of at least one component, in particular sliding-action contacts (31), are provided on both sides (12, 13) of the frame element (11).

11. System consisting of two gear mechanism housings according to one of the preceding claims, **characterized in that** the basic housing bodies (1, 2) of the gear mechanism housings are of mirror-symmetrical design, and **in that** the frame elements (11) and the cover elements (21) of the two basic housing bodies (1, 2) are of identical design and are arranged oriented in opposite directions.

## Revendications

1. Boîtier de transmission pourvu d'une transmission d'essuie-glace pour un dispositif d'essuie-glace d'un véhicule automobile, comprenant un corps de base de boîtier (1, 2) et un couvercle de boîtier fermant le corps de base de boîtier (1, 2), et le couvercle de boîtier comprenant un élément de cadre (11) et un élément de couvercle (21), **caractérisé en ce que**
l'élément de cadre (11) peut être monté avec l'un de deux côtés opposés (12, 13) sur le corps de base de boîtier (1, 2) et l'élément de couvercle (21) peut être monté sur les deux côtés (12, 13) de l'élément de cadre (11).

2. Boîtier de transmission selon la revendication 1, **caractérisé en ce que** l'élément de cadre (11) comprend deux contours d'appui (14, 15) à symétrie spéculaire disposés sur des côtés différents de l'élément de cadre (11).

3. Boîtier de transmission selon la revendication 2, **caractérisé en ce que** l'élément de couvercle (21) présente deux contours conjugués (22, 23), chaque contour conjugué (22, 23) pouvant être amené en alignement avec l'un des contours d'appui (14, 15).

4. Boîtier de transmission selon l'une quelconque des revendications 2 ou 3, **caractérisé en ce que** le corps de base de boîtier (1, 2) présente un contour conjugué (9, 10) qui peut être amené en alignement avec l'un des contours d'appui (14, 15) de l'élément de cadre (11).

5. Boîtier de transmission selon l'une quelconque des revendications précédentes, **caractérisé en ce que** chaque côté (12, 13) de l'élément de cadre (11) présente une rainure de réception (18, 19) pour un joint d'étanchéité (16, 17), et **en ce que** les deux rainures de réception (18, 19) sont réalisées avec une symétrie spéculaire l'une par rapport à l'autre.

6. Boîtier de transmission selon la revendication 5, et l'une quelconque des revendications 2 à 4, **caractérisé en ce qu'**un joint d'étanchéité (16, 17) est reçu dans chaque rainure de réception (18, 19) et **en ce que** les deux joints d'étanchéité (16, 17) sont réalisés de manière identique et forment au moins en partie les contours d'appui (14, 15) de l'élément de cadre (11).

7. Boîtier de transmission selon l'une quelconque des revendications précédentes, **caractérisé en ce que** l'élément de couvercle (21) est réalisé sous forme de composant en forme de disque, de préférence sous forme de pièce estampée/cintrée.

8. Boîtier de transmission selon l'une quelconque des revendications précédentes, **caractérisé en ce que** des composants électroniques, en particulier des composants d'antiparasitage, sont disposés dans l'élément de cadre (11).

9. Boîtier de transmission selon l'une quelconque des revendications précédentes, **caractérisé en ce qu'**une douille de raccordement (29), en particulier codée, est prévue sur l'élément de cadre (11).

10. Boîtier de transmission selon l'une quelconque des revendications précédentes, **caractérisé en ce que** des moyens de retenue, en particulier des ouvertures de réception (30), disposés avec une symétrie spéculaire, sont prévus des deux côtés (12, 13) de l'élément de cadre (11), pour recevoir de manière alternée au moins un composant, en particulier des balais de contact (31).

11. Système constitué de deux boîtiers de transmission selon l'une quelconque des revendications précédentes, **caractérisé en ce que** les corps de base de boîtier (1, 2) du boîtier de transmission sont réalisés avec une symétrie spéculaire, et **en ce que** les éléments de cadre (11) et les éléments de couvercle (21) des deux corps de base de boîtier (1, 2) sont réalisés de manière identique et sont orientés à l'opposé l'un de l'autre.
